# EUROPEAN PATENT SPECIFICATION

(11) **EP 4 026 422 B1**
(45) Date of publication and mention of the grant of the patent: **29.04.2026**
(21) Application number: 21217654.9
(22) Date of filing: 23.12.2021
(51) Int. Cl.: A01G 20/47

(54) **GARDEN BLOWER**
GARTENBLÄSER
SOUFFLEUR DE JARDIN

(30) Priority: 06.01.2021 CN 202110012662
(43) Date of publication of application: 13.07.2022
(73) Proprietor: Techtronic Cordless GP, Anderson, SC 29621 (US)
(72) Inventor: LEE, Hei Man, Kwai Chung (HK); WANG, Li Feng, Dongguan City (CN)
(74) Representative: Zimmermann & Partner Patentanwälte mbB

(56) References cited:
- EP-A2- 2 431 529
- WO-A1-2016/201455
- WO-A2-2008/109038
- US-A- 6 105 206
- US-A1- 2015 237 808
- US-A1- 2016 107 202
- US-A1- 2016 208 822
- US-B2- 9 737 182

## Description

### Technical Field

The present invention relates to a blower, and in particular to a blower for gardening operations.

### Background Art

A garden blower is mainly used to blow away fallen leaves, and dust, water, snow etc., on a road. The blower has a fan and an electric motor for driving the fan, and a generated air flow travels through an air guide channel of the blower. In recent years, blowers using an air guide channel having a guide surface with the Coanda effect have a greater blowing volume and a greater blowing rate. However, the air guide channel having a guide surface of an existing blower is not suitable for a garden blower having a long air duct.

Document US 2016/208822 A1 discloses a blower having a curved blower tube, a fan unit, and a handle housing, wherein the fan unit having a fan and a motor positioned within the blower tube and having an inclined axis with regard to the tube main axis.

One of the objectives of the present invention is to design a garden blower, which can use a guide surface with the Coanda effect to increase the blowing volume and blowing rate of the garden blower.

### Summary of the Invention

The present invention aims to provide a garden blower, which can use a guide surface generating the Coanda effect to increase its blowing volume and blowing rate.

Further objectives of the present invention will be derived by those skilled in the art from the following description. Therefore, the above-mentioned object statement is not exhaustive, and only used to illustrate some of many objectives of the present invention.

In order to achieve the above objectives, the present invention provides a garden blower as defined in claim 1.

The air flow generating device is at least partially located outside the air duct, preferably at least partially located inside the handle housing.

In some embodiments, the air flow generating device comprises either or both of: a secondary air inlet different from the primary air inlet; and a secondary air outlet different from the primary air outlet.

In some embodiments, the air flow generating device is axially located near the middle of the air duct, preferably axially located in the middle 1/3 section of the air duct.

In some embodiments, the garden blower further comprises a fluid communication interface in fluid communication with the air flow generating device and the air duct, and the fluid communication interface comprises a channel having a double-layer structure and a nozzle in fluid communication with the channel, and preferably, the nozzle is oriented toward a distal side of the air duct.

In some embodiments, the channel has a generally annular or arc-shaped cross section, and preferably, the channel is arranged coaxially with the air duct.

In some embodiments, the nozzle is composed of a first guide surface having a streamlined protrusion and an opposite first mating surface, and the air flow in the channel is guided by the first guide surface to the outside of the channel, preferably guided to the air duct to travel distally, and more preferably guided to a region of the air duct near the longitudinal axis to travel distally.

In some embodiments, the fluid communication interface comprises a second guide surface which guides ambient air to a region near the nozzle, preferably the second guide surface is located away from the first guide surface and on a surface opposite the first mating surface, and preferably the second guide surface has a streamlined protrusion.

In some embodiments, an auxiliary air inlet facing the ambient environment is arranged adjacent to the second guide surface.

### Brief Description of the Drawings

The foregoing and other features of the present invention will become apparent from the following description of preferred embodiments provided by way of example only and with reference to accompanying drawings, in which:
Fig. 1 shows a schematic diagram of a garden blower;
Fig. 2 shows an exploded view of the garden blower;
Fig. 3 shows a schematic diagram of an air flow generating device according to an embodiment of the present invention;
Fig. 4A shows a schematic diagram of the air flow generating device according to an embodiment of the present invention at least partially arranged inside a handle housing;
Fig. 4B shows a schematic diagram of the air flow generating device according to an embodiment of the present invention at least partially arranged inside a handle housing;
Fig. 5 shows a cut-away view of a channel and a nozzle according to an embodiment of the present invention;
Fig. 6 shows a cross-sectional view of the channel and the nozzle according to an embodiment of the present invention along an X-axis;
Fig. 7 shows a schematic diagram of a first auxiliary air inlet according to an embodiment of the present invention;
Fig. 8 shows a schematic diagram of the air flow generating device, not according to the present invention, located in an air duct;
Fig. 9 shows a schematic diagram of the air duct not according the present invention; and
Fig. 10 shows a cross-sectional view of the channel and the nozzle according to an embodiment of the present invention along the X-axis.

### Detailed Description of Embodiments

In the appended claims and the foregoing description of the present invention, unless otherwise required by the expression or necessary implications, the word "comprise" or, for example, its variants (such as "comprises" or "comprising") is used in an inclusive manner, i.e., it indicates the presence of the features described, and does not exclude the presence or addition of other features in various embodiments of the present invention.

For example, the terms "horizontal", "vertical", "transverse", "longitudinal", "above", "below" and the like used herein are intended to describe the present invention according to an orientation of the present invention in normal use, and are not intended to limit the present invention to any specific orientation.

It should be understood that if any publication of the prior art is cited herein, such a reference does not constitute an admission that the publication forms part of the common general knowledge in the art in any country.

Description will be made below with reference to the drawings and embodiments.

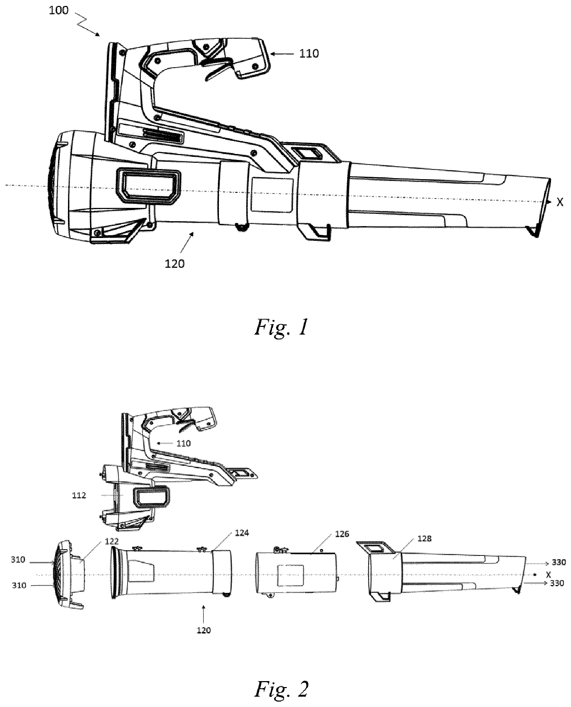

Fig. 1 shows a schematic diagram of a garden blower 100 (hereinafter referred to as blower 100). The blower 100 comprises a handle housing 110 and an air duct 120 arranged in a longitudinal direction, the longitudinal direction defining a longitudinal axis as an X-axis. For ease of illustration, the positive direction of the X-axis is defined as "distal", and the negative direction of the X-axis is defined as "proximal"; "distal end" refers to the most distal position of a component, and "proximal end" refers to the most proximal position of the component; and "centre" refers to a region of the component around the longitudinal axis. The handle housing 110 may have various configurations, with a view to having enough space to accommodate the components therein, facilitating holding, balancing weight, etc. In the embodiment shown in Fig. 1, the handle housing 110 is fitted to a rechargeable battery. Power sources of the present invention include, but are not limited to an AC power source, a rechargeable battery, etc. The handle housing 110 is provided with various control keys, which may include on/off, speed adjustment and other additional functions of the blower 100. In order to facilitate the operation, the longitudinal axis of the air duct 120 may extend slightly obliquely to the ground as desired. The blower 100 usually has a long air duct 120. In some embodiments of the present invention, the length L of the air duct 120 along the longitudinal axis is 3 times or more or may be 4 times or more or 5 times or more greater than the average outer diameter of its cross section perpendicular to the longitudinal axis. The air duct 120 may be arranged such that the proximal and distal radial dimensions of the air duct are the same or the radial dimension gradually decreases from the proximal side to the distal side.

Fig. 2 shows an exploded view of the blower 100. The handle housing 110 may be attached to the air duct 120 by means of a common mechanism in the art. In the embodiment shown in Fig. 2, the handle housing 110 is attached to the air duct 120 by means of a collar 112 arranged below the handle housing, but other connection means are also possible. In some embodiments, there is a communicating channel between the handle housing 110 and the interior of the air duct 120, such that the air from the air duct 120 can cool an electronic device, such as a control circuit board (not shown), in the handle housing 110. It can be understood that the control circuit board may also be arranged in other positions. The air duct 120 may be integrally formed. In order to save storage space, the air duct 120 may also be composed of at least two detachable parts. In the embodiment shown in Fig. 2, the air duct 120 is composed of four parts, which are respectively an air inlet pipe 122 which provides a primary air inlet 310 is at the proximal end, a first air duct 124, an intermediate connecting pipe 126, and a second air duct 128 which provides a primary air outlet 330. The four parts can be fitted together by common fitting means in the art. The air duct 120 defines therein an air channel extending along the axis X thereof. The handle housing 110 may be integrally formed, or may be assembled from a plurality of different parts.

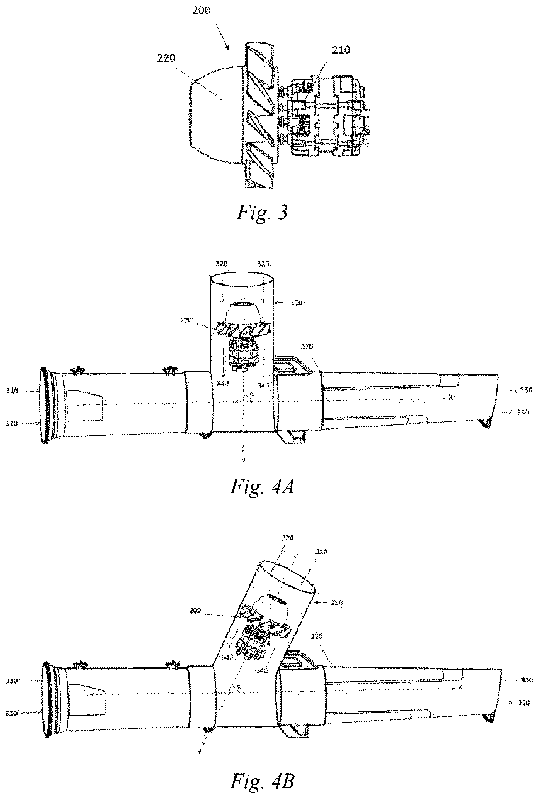

Fig. 3 shows a schematic diagram of an air flow generating device 200 according to an embodiment of the present invention. The air flow generating device 200 comprises a fan 220 and an electric motor 210 for driving the fan 220. The air flow generating device 200 may be arranged in a forward direction (the fan 220 is oriented in the wind direction) or in a reverse direction (the fan 220 is oriented away from the wind direction). The electric motor 210 is not limited to a brushed or brushless electric motor, and preferably a brushless electric motor is used. In the embodiment shown in Fig. 3, the electric motor 210 is a 25000 RPM three-phase brushless electric motor. Those skilled in the art can understand that it is also possible to use electric motors in other forms or at other speeds. The fan 220 includes, but is not limited to, an axial flow fan and a mixed flow fan, and the fan 220 may be provided with a flow stabilizing component. In the embodiment shown in Fig. 3, the fan 220 uses an axial flow fan. An output shaft of the electric motor 210 may be connected to a rotating shaft of the fan 220 to drive the fan 220 to rotate.

In the design of a conventional blower, the air flow generating device 200 takes in air through the primary air inlet 310 of the air duct 120, and blows air through the primary air outlet 330 of the air duct 120. That is to say, the air flow generating device 200 is completely located in the air duct 120, and is arranged coaxially with the air duct 120. It is conceivable in the present invention that the air flow generating device 200 mentioned above is arranged differently. In particular, it is conceivable in the present invention that the air flow generating device 200 is arranged at a certain angle relative to the air duct 120. In other words, it is conceivable in the present invention that the air flow generating device 200 is at least partially formed outside the air duct 120. In this way, the entire interior of the air duct 120 may be used to form an air channel. Alternatively, a fluid communication interface according to the present invention can be mounted in the interior of the air duct 120, which will be further explained below. The arrangement of the air flow generating device 200 and the provision of the fluid communication interface which are mentioned above impart the blower of the present invention many advantages including but not limited to achieving a larger blowing volume with a smaller size.

Figs. 4A and 4B show schematic diagrams of the air flow generating device 200 according to the embodiment of the present invention at least partially arranged inside the handle housing 110. The output shaft of the electric motor 210 forms an angle α with the longitudinal axis. The angle α is defined as an included angle between the positive direction of the X-axis and the reverse direction of the Y-axis, with the Y-axis being located on the output shaft of the electric motor 210, and the side close to the air duct 120 being considered as the positive direction. The angle α may be an acute angle (see Fig. 4B), a right angle (see Fig. 4A), or even an obtuse angle. In this embodiment, the primary air inlet 310 is again located on the proximal side of the blower 100, and the primary air outlet 330 is again located on the distal side of the blower 100. The air flow generating device 200 will have a secondary air inlet 320 different from the primary air inlet 310 and/or a secondary air outlet 340 different from the primary air outlet 330. The air flow generating device 200 takes in air through secondary air inlet 320, and blows air through the secondary air outlet 340. In some embodiments, the secondary air inlet 320 may be located at the handle housing 110 and directly or indirectly exposed to the ambient air, and the secondary air inlet 320 may not be limited to the reverse arrangement along the Y-axis, for example, the secondary air inlet 320 may be arranged on a side surface of the air flow generating device 200. In some embodiments, the secondary air outlet 340 may be located in the air channel defined by the air duct 120, or is in fluid communication with the air channel. In this way, the air blown by the air flow generating device 200 enters the air duct 120, which promotes additional air to enter the primary air inlet 310 and exit the primary air outlet 330, thereby increasing the blowing volume of the blower 100.

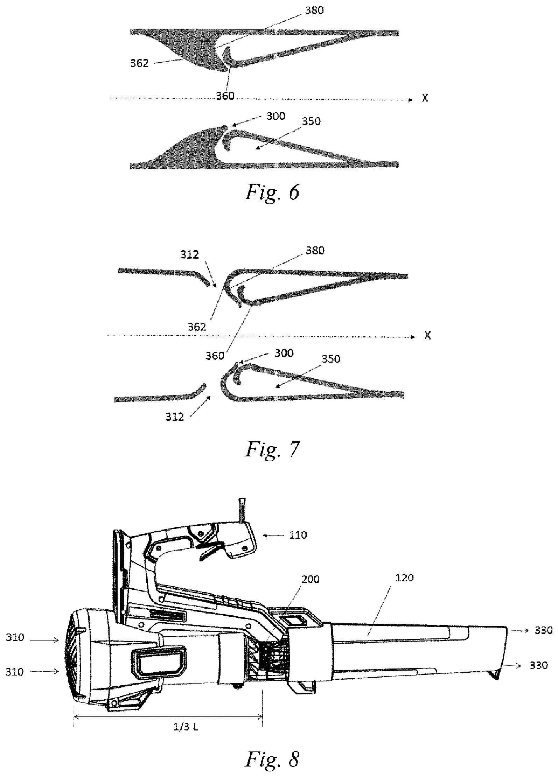

In some embodiments, the air flow generating device 200 is generally located at the middle of the air duct 120 in the axis X direction. In some embodiments, the air flow generating device 200 is generally located, in the axis X direction, at a position in the air duct 120 at a distance of 1/3 of the total length L of the air duct 120 from the proximal end (shown in Fig. 8). In other embodiments, the air flow generating device 200 is generally located at a position of the middle 1/3 section of the air duct 120 in the axis X direction.

The advantage resulting from arranging the air flow generating device 200 inside the handle housing 110 lies in that the internal space of the handle housing 110 is fully utilized. However, it is also possible to arrange the air flow generating device 200 in other ways. For example, a branch pipe may be branched from the air duct 120, and the air flow generating device 200 is mounted in the branch pipe. Alternatively, a larger blower housing can also be provided to accommodate the air flow generating device 200.

The design of the present invention allows an electric motor with a higher speed and a smaller size (thus a smaller size of the blower) to be used, and at the same time can achieve even greater blowing volume and blowing power compared to a conventional blower, thereby achieving remarkable technical effects.

In some embodiments, the air channel of the air duct 120 is in fluid communication with the air flow generating device 200 at the junction between the air channel and the handle housing 110, such that the air flow generated by the air flow generating device 200 can enter the air channel of the air duct 120. The junction defines a fluid communication interface. The fluid communication interface may be a part of the air duct 120, or be a part of the handle housing 110, or may be defined by a part of the air duct 120 together with a part of the handle housing 110, or may be a separate structure. The fluid communication interface may be completely located in the air duct 120, or at least partially located in the air duct 120, or completely located inside the handle housing 110. At least part of the fluid communication interface has a channel 350 of a double-layer structure, the channel 350 is in fluid communication with the air flow generating device 200 and the air duct 120, such that the air flow generated by the air flow generating device 200 can flow to the channel 350 and then enter the air channel of the air duct 120 through the channel 350. In some embodiments, the channel 350 may have an annular, arc-shaped or linear cross section. For the sake of simplicity, the following description only refers to a substantially annular channel. However, under the teaching of the present invention, those skilled in the art may also apply the teaching to the channel 350 having other configurations and arrangements.

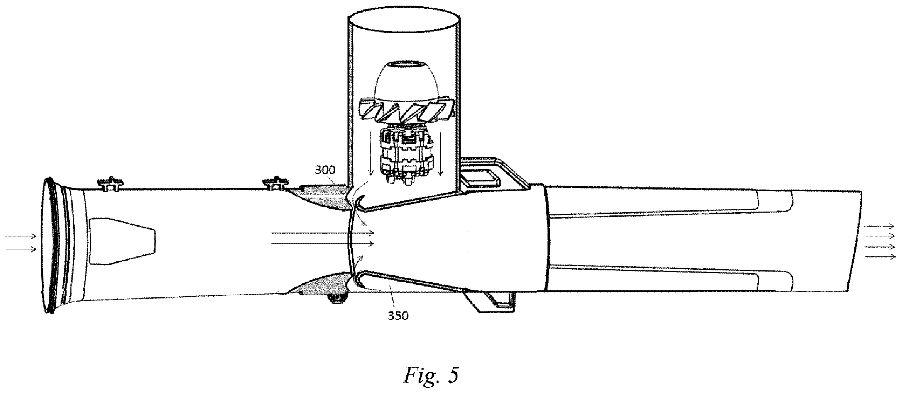

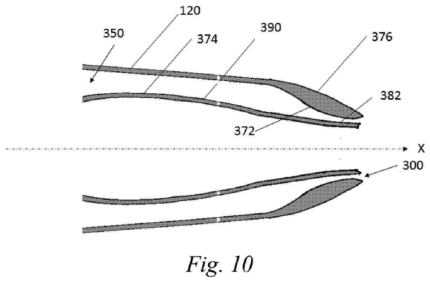

In the embodiment where the channel 350 is substantially annular, the annular channel 350 may be for example located in the air duct 120 and arranged coaxially therewith, and is in communication with the interior of the handle housing 110 in the positive direction of the Y-axis. The channel 350 is provided with a nozzle 300, and preferably, the nozzle 300 is oriented toward the distal side of the air duct 120. Referring to Fig. 5, Fig. 5 schematically shows a section of the channel 350 and the nozzle 300, with arrows indicating the flow direction of air. Fig. 6 shows a cross section of the channel 350 and the nozzle 300 in the embodiment of Fig. 5 along the X-axis, showing the details of the nozzle 300. The cross-sectional dimension is only schematic and does not represent an actual dimension. The above description also applies to Figs. 7 and 10. In the embodiment of Figs. 5 and 6, the nozzle 300 is arranged at the position where the channel 350 terminates in the air duct 120, and the nozzle 300 may also be arranged at other positions. As shown in Fig. 6, the nozzle 300 is composed of a first guide surface 360 having a streamlined protrusion, and a first mating surface 380. The air flow inside the channel 350 is ejected through slits of the nozzle 300 to the outside of the channel 350 at a high speed. At this time, the air flow is always flowing while attaching to the first guide surface 360, and after exiting the nozzle 300, will continue to travel distally in the air channel of the air duct 120.

Since the air flow is ejected at the nozzle 300 at a high speed, a low-pressure region will be formed from the vicinity of the annular nozzle 300 to its central region. The low-pressure region allows the ambient air at the distal side of the air duct 120 to be dragged to the low-pressure region through the primary air inlet 310. In the embodiment shown in Fig. 6, a second guide surface 362 having a streamlined protrusion is optionally arranged away from the first guide surface 360 and located on a surface opposite the first mating surface 380. The second guide surface 362 may promote the ambient air from the proximal side of the air duct 120 to reach the low-pressure region, achieving the effect of increasing the blowing volume.

Fig. 7 shows that, in addition to the primary air inlet 310 or instead of the primary air inlet 310, a first auxiliary air inlet 312 is provided next to the proximal side of the second guide surface 362 such that the ambient air at the circumferential periphery of the air duct 120 is guided to the low-pressure region. The first auxiliary air inlet 312 allows the ambient air to be guided to the low-pressure region formed by means of the nozzle 300. The first auxiliary air inlet 312 may be continuously distributed on the circumference of a housing of the air duct 120. For example, the first auxiliary air inlet 312 may be an array of apertures or an array of holes or an opening in any other form, and is preferably axially symmetrically distributed around the longitudinal axis X. It can be understood that if the first auxiliary air inlet 312 is not provided, the second guide surface 362 may have the configuration shown in Figs. 5 and 6. The channel 350 may be arranged near the middle of the air duct 120, for example, in the middle with an offset within a range of 1/3 of the length of the air duct 120 from the proximal side or the distal side.

Other positions and orientations are also possible for the channel 350. For example, the channel 350 may be only partially located in the air duct 120, or the channel 350 may be substantially located inside the handle housing 110. The nozzle 300 of the channel 350 is arranged facing the air channel of the air duct 120.

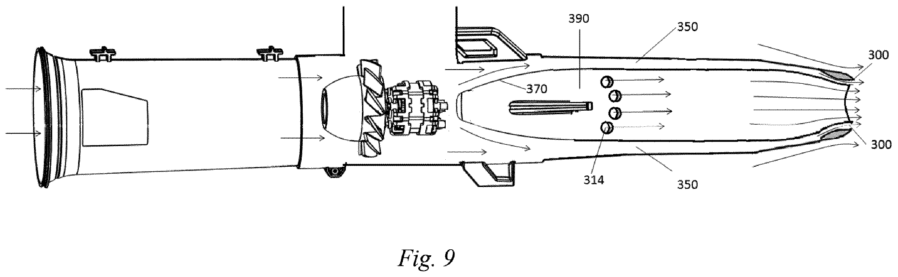

In a blower shown in Fig. 8, not according to the invention, the air flow generating device 200 is located in the air duct 120, for example, located in the intermediate connecting pipe 126 of the air duct 120, such that the output shaft of the electric motor 210 is located on the longitudinal axis of the air duct 120. The advantage of this arrangement lies in that the air flow generated by the air flow generating device 200 will not be deflected by a large angle, which reduces the loss of blowing power. In this embodiment, the primary air inlet 310 is located at the proximal end of the air flow generating device 200. Optionally, the primary air inlet 310 may also be arranged on a side surface of the air flow generating device 200. Similar to the embodiment shown in Figs. 5 and 6, at least part of the air duct 120 should have a channel 350 of a double-layer structure to form the nozzle 300, and the channel 350 is arranged on the distal side of the air flow generating device 200. To this end, an air guide structure 390 having a hollow interior is provided in the air duct 120, and the air guide structure 390 constitutes an inner layer of the channel 350. A wall surface of the air duct 120 constitutes an outer layer of the channel 350. Fig. 9 shows a schematic diagram of the air duct 120, not according the present invention, showing a section of the channel 350 and the nozzle 300, with arrows indicating the flow direction of air. In the example shown in Fig. 9, the air guide structure 390 has a first guide surface 370 having a streamlined protrusion, and by means of the first guide surface 370, the air flow generated by the air flow generating device 200 is guided to the interior of the channel 350. The air guide structure 390 may also be arranged to have other configurations. In the example shown in Fig. 9, the nozzle 300 is arranged at the terminal distal end of the air duct 120 and is in fluid communication with the channel 350, and the terminal distal end of the channel 350 terminates at the terminal distal end of the air duct 120. The nozzle 300 may also be arranged in other places in fluid communication with the channel 350.

In order to guide the ambient air to the central region of the channel 350 (i.e., the hollow interior of the air guide structure 390) to increase the blowing volume, the air duct 120 may be provided with a second auxiliary air inlet 314. The second auxiliary air inlet 314 constituted by a row of holes shown in Fig. 9 is only schematic, and does not represent the actual shape and dimension of the second auxiliary air inlet 314. The second auxiliary air inlet 314 penetrates the outer layer and the inner layer of the channel 350. The second auxiliary air inlet 314 communicates the external ambient air with the central region of the channel 350, and not with the interior of the channel 350, that is to say, the external ambient air does not enter the space between the outer layer and the inner layer of the channel 350. The second auxiliary air inlet 314 may be continuously distributed on the circumference of the housing of the air duct 120. For example, the second auxiliary air inlet 314 may be an array of apertures or an array of holes or an opening in any other form, and is preferably axially symmetrically distributed around the longitudinal axis X. The function of the second auxiliary air inlet 314 lies in that, when a high-speed air flow is ejected from the nozzle 300, a low-pressure region will be formed from the vicinity of the annular nozzle 300 to its central region, the air in the central region of the channel 350 will be supplemented to the low-pressure region, and the second auxiliary air inlet 314 allows the ambient air to be continuously supplemented to the central region of the channel 350.

Fig. 10 shows a cross section of the channel 350 and the nozzle 300 in the embodiment of Fig. 9 along the X-axis, showing the details of the nozzle 300. The nozzle 300 is constituted by a second guide surface 372 having a streamlined protrusion and the first mating surface 382. The air flow in the channel 350 flows while attaching to the second guide surface 372, and is then ejected through the slits of the nozzle 300 to the outside of the channel 350. In the embodiment shown in Fig. 10, since the nozzle 300 is arranged at the terminal distal end of the air duct 120, the air flow exits both the nozzle 300 and the air duct 120. In some embodiments, if the nozzle 300 is located near the distal side of the air duct 120, the air flow is always flowing while attaching to the second guide surface 372, and after exiting the nozzle 300, will continue to travel distally in the air channel of the air duct 120, and is preferably guided to the region near the longitudinal axis X of the air duct 120.

In the embodiment shown in Fig. 10, the second guide surface 372 having the streamlined protrusion is arranged on the outer layer of the channel 350, the first mating surface 382 is arranged on the inner layer of the channel 350, and a fourth guide surface 376 having a streamlined protrusion is optionally arranged away from the first mating surface 382 and located on the surface opposite the second guide surface 372. The purpose of providing the fourth guide surface 376 is to guide the ambient air near the nozzle 300 to the low-pressure region formed near the nozzle 300. In some embodiments, the second guide surface 372 may also be arranged on the inner layer of the channel 350, and the first mating surface 382 is arranged on the outer layer of the channel 350. As such, if the nozzle 300 is located at the terminal distal end of the air duct 120, the fourth guide surface 376 is optionally arranged away from the second guide surface 372 and located on the surface opposite the first mating surface 382, that is to say, the fourth guide surface 376 is generally arranged on the side of the outer layer of the channel 350 that is exposed to the ambient air.

In the embodiment shown in Fig. 10, the channel 350 is further provided with a third guide surface 374 having a streamlined protrusion, the air flow in the channel 350 is guided by the third guide surface 374, and the third guide surface 374 is arranged opposite the second guide surface 372 in a staggered manner, such that the air flow in the channel 350 can be guided twice on the guide surface having the Coanda effect, which can accelerate the flow of the air flow.

In some embodiments, the first auxiliary air inlet 312 and the second auxiliary air inlet 314 may have an edge extending obliquely from the outer proximal side of the air duct 120 to the inner distal side of the air duct 120, which is beneficial for the ambient air to flow in the same direction as the air flow in the air duct 120.

While the present invention is shown and described in detail above with reference to the accompanying drawings, it should be regarded as illustrative rather than restrictive. It should be understood that only exemplary embodiments are shown and described. It can be understood that any feature described herein may be used in any embodiment. The illustrative embodiments do not exclude each other or exclude other embodiments not listed herein. The scope of protection of the invention is provided by the appended claims.

## Claims

1. Garden blower (100), comprising a handle housing (110) and an air duct (120) arranged in a longitudinal direction, with the air duct (120) defining a longitudinal axis (X) in the longitudinal direction of the garden blower (100), wherein the air duct (120) defines therein an air channel extending from a primary air inlet (310) to a primary air outlet (330) along the longitudinal axis (X), the garden blower (100) comprising:
an air flow generating device (200) which comprises a fan (220) and an electric motor (210) for driving the fan (220) to rotate,
wherein an output shaft of the electric motor (210) of the air flow generating device (200) is arranged at an angle (α) relative to the longitudinal axis (X) of the air duct (120),
wherein the air flow generating device (200) is at least partially located outside the air duct (120).

2. Garden blower (100) according to Claim 1, wherein the handle housing (110) is attached to the air duct (120) and the air flow generating device (200) is at least partially located inside the handle housing (110).

3. Garden blower (100) according to Claim 1, wherein the air flow generating device (200) comprises either or both of:
a secondary air inlet different from the primary air inlet (310); and
a secondary air outlet different from the primary air outlet (330).

4. Garden blower (100) according to any one of Claims 1-3, wherein the air flow generating device (200) is axially located near the middle of the air duct (120), preferably axially located in the middle 1/3 section of the air duct (120).

5. Garden blower (100) according to any one of Claims 1-4, wherein the garden blower (100) further comprises a fluid communication interface in fluid communication with the air flow generating device (200) and the air duct (120), and the fluid communication interface comprises a channel (350) having a double-layer structure and a nozzle (300) in fluid communication with the channel (350), and preferably, the nozzle (300) is oriented toward a distal side of the air duct (120).

6. Garden blower (100) according to Claim 5, wherein the channel (350) has a generally annular or arc-shaped cross section, and preferably, the channel (350) is arranged coaxially with the air duct (120).

7. Garden blower (100) according to Claim 5, wherein the nozzle (300) is composed of a first guide surface (360) having a streamlined protrusion and an opposite first mating surface, and the air flow in the channel (350) is guided by the first guide surface (360) to the outside of the channel (350), preferably guided to the air duct (120) to travel distally, and more preferably guided to a region of the air duct (120) near the longitudinal axis (X) to travel distally.

8. Garden blower (100) according to Claim 7, wherein the fluid communication interface comprises a second guide surface (362) which guides ambient air to a region near the nozzle (300), preferably the second guide surface (362) is located away from the first guide surface (360) and on a surface opposite the first mating surface, and preferably the second guide surface (362) has a streamlined protrusion.

9. Garden blower (100) according to Claim 8, wherein an auxiliary air inlet (312) facing the ambient environment is arranged adjacent to the second guide surface (362).

## Patentansprüche

1. Gartenbläser (100), umfassend ein Griffgehäuse (110) und eine in einer Längsrichtung angeordnete Luftleitung (120), wobei die Luftleitung (120) eine Längsachse (X) in Längsrichtung des Gartenbläsers (100) definiert, wobei die Luftleitung (120) im Inneren einen Luftkanal definiert, der sich entlang der Längsachse (X) von einem primären Lufteinlass (310) zu einem primären Luftauslass (330) erstreckt, wobei der Gartenbläser (100) umfasst:
eine Luftstromerzeugungsvorrichtung (200) mit einem Gebläse (220) und einem Elektromotor (210) zum drehenden Antrieb des Gebläses (220),
wobei eine Abtriebswelle des Elektromotors (210) der Luftstromerzeugungsvorrichtung (200) in einem Winkel (α) bezüglich der Längsachse (X) der Luftleitung (120) angeordnet ist,
wobei die Luftstromerzeugungsvorrichtung (200) zumindest teilweise außerhalb der Luftleitung (120) angeordnet ist.

2. Gartenbläser (100) nach Anspruch 1,
wobei das Griffgehäuse (110) an der Luftleitung (120) angebracht ist und die Luftstromerzeugungsvorrichtung (200) zumindest teilweise innerhalb des Griffgehäuses (110) angeordnet ist.

3. Gartenbläser (100) nach Anspruch 1,
wobei die Luftstromerzeugungsvorrichtung (200) eines oder beide der folgenden Elemente umfasst:
einen sekundären Lufteinlass, der sich von dem primären Lufteinlass (310) unterscheidet; und
einen sekundären Luftauslass, der sich von dem primären Luftauslass (330) unterscheidet.

4. Gartenbläser (100) nach einem der Ansprüche 1 bis 3,
wobei die Luftstromerzeugungsvorrichtung (200) axial in der Nähe der Mitte der Luftleitung (120) angeordnet ist, vorzugsweise axial im mittleren Drittel der Luftleitung (120).

5. Gartenbläser (100) nach einem der Ansprüche 1 bis 4,
wobei der Gartenbläser (100) ferner eine Fluidverbindungsschnittstelle aufweist, die mit der Luftstromerzeugungsvorrichtung (200) und der Luftleitung (120) in Fluidverbindung steht, und wobei die Fluidverbindungsschnittstelle einen Kanal (350) mit doppelschichtiger Struktur und eine Düse (300) in Fluidverbindung mit dem Kanal (350) umfasst und wobei vorzugsweise die Düse (300) zu einer distalen Seite der Luftleitung (120) hin ausgerichtet.

6. Gartenbläser (100) nach Anspruch 5,
wobei der Kanal (350) einen insgesamt ringförmigen oder bogenförmigen Querschnitt aufweist und wobei der Kanal (350) vorzugsweise koaxial mit der Luftleitung (120) angeordnet ist.

7. Gartenbläser (100) nach Anspruch 5,
wobei die Düse (300) aus einer ersten Führungsfläche (360) mit einem stromlinienförmigen Vorsprung und einer gegenüberliegenden ersten Passfläche besteht und wobei der Luftstrom in dem Kanal (350) mittels der ersten Führungsfläche (360) zu der Außenseite des Kanals (350) hin geführt ist, vorzugsweise zu der Luftleitung (120) hin geführt ist, um distal weiterzuströmen, und besonders bevorzugt zu einem Bereich der Luftleitung (120) nahe der Längsachse (X) hin geführt ist, um distal weiterzuströmen.

8. Gartenbläser (100) nach Anspruch 7,
wobei die Fluidverbindungsschnittstelle eine zweite Führungsfläche (362) umfasst, die Umgebungsluft zu einem Bereich nahe der Düse (300) hin führt, wobei vorzugsweise die zweite Führungsfläche (362) von der ersten Führungsfläche (360) entfernt liegt und an einer der ersten Passfläche gegenüberliegenden Fläche angeordnet ist, und wobei vorzugsweise die zweite Führungsfläche (362) einen stromlinienförmigen Vorsprung aufweist.

9. Gartenbläser (100) nach Anspruch 8,
wobei ein Hilfslufteinlass (312), der der Umgebung zugewandt ist, angrenzend an die zweite Führungsfläche (362) angeordnet ist.

## Revendications

1. Souffleur de jardin (100), comprenant un boîtier formant poignée (110) et un conduit d'air (120) disposé dans une direction longitudinale, le conduit d'air (120) définissant un axe longitudinal (X) dans la direction longitudinale du souffleur de jardin (100), le conduit d'air (120) définissant à l'intérieur un canal d'air qui s'étend depuis une entrée d'air primaire (310) jusqu'à une sortie d'air primaire (330) le long de l'axe longitudinal (X), le souffleur de jardin (100) comprenant :
un dispositif générateur de flux d'air (200) qui comprend un ventilateur (220) et un moteur électrique (210) destiné à entraîner le ventilateur (220) en rotation,
dans lequel
un arbre de sortie du moteur électrique (210) du dispositif générateur de flux d'air (200) est disposé selon un angle (α) par rapport à l'axe longitudinal (X) du conduit d'air (120),
le dispositif générateur de flux d'air (200) est situé au moins partiellement à l'extérieur du conduit d'air (120).

2. Souffleur de jardin (100) selon la revendication 1,
dans lequel le boîtier formant poignée (110) est fixé au conduit d'air (120), et le dispositif générateur de flux d'air (200) est situé au moins partiellement à l'intérieur du boîtier formant poignée (110).

3. Souffleur de jardin (100) selon la revendication 1,
dans lequel le dispositif générateur de flux d'air (200) comprend l'un ou l'autre ou les deux éléments suivants :
une entrée d'air secondaire différente de l'entrée d'air primaire (310) ; et
une sortie d'air secondaire différente de la sortie d'air primaire (330).

4. Souffleur de jardin (100) selon l'une des revendications 1 à 3,
dans lequel le dispositif générateur de flux d'air (200) est situé axialement près du centre du conduit d'air (120), de préférence axialement dans le tiers central du conduit d'air (120).

5. Souffleur de jardin (100) selon l'une des revendications 1 à 4,
dans lequel le souffleur de jardin (100) comprend en outre une interface de communication fluidique qui est en communication fluidique avec le dispositif générateur de flux d'air (200) et avec le conduit d'air (120), et l'interface de communication fluidique comprend un canal (350) présentant une structure à double couche et une buse (300) qui est en communication fluidique avec le canal (350), et de préférence, la buse (300) est orientée vers un côté distal du conduit d'air (120).

6. Souffleur de jardin (100) selon la revendication 5,
dans lequel le canal (350) présente une section transversale généralement annulaire ou en forme d'arc, et de préférence, le canal (350) est disposé coaxialement avec le conduit d'air (120).

7. Souffleur de jardin (100) selon la revendication 5,
dans lequel la buse (300) est composée d'une première surface de guidage (360) munie d'une saillie aérodynamique et d'une première surface complémentaire opposée, et le flux d'air dans le canal (350) est guidé par la première surface de guidage (360) vers l'extérieur du canal (350), de préférence guidé vers le conduit d'air (120) pour s'écouler distalement, et plus préférablement guidé vers une zone du conduit d'air (120) proche de l'axe longitudinal (X), pour s'écouler distalement.

8. Souffleur de jardin (100) selon la revendication 7,
dans lequel l'interface de communication fluidique comprend une deuxième surface de guidage (362) qui guide l'air ambiant vers une zone proche de la buse (300), de préférence, la deuxième surface de guidage (362) est située à distance de la première surface de guidage (360) et sur une surface opposée à la première surface complémentaire, et de préférence, la deuxième surface de guidage (362) présente une saillie aérodynamique.

9. Souffleur de jardin (100) selon la revendication 8,
dans lequel une entrée d'air auxiliaire (312) tournée vers l'environnement ambiant est disposée de manière adjacente à la deuxième surface de guidage (362).
